# EUROPÄISCHE PATENTSCHRIFT

(11) **EP 1 373 052 B1**
(45) Veröffentlichungstag und Bekanntmachung des Hinweises auf die Patenterteilung: **24.11.2010**
(21) Anmeldenummer: 02714196.9
(22) Anmeldetag: 28.03.2002
(51) Int. Cl.: B62D 5/04

(54) **ANTRIEBSEINRICHTUNG EINES KRAFTFAHRZEUG-ACHSLENKMODULS UND ELEKTROMECHANISCHE KRAFTFAHRZEUGLENKUNG**
DRIVE DEVICE OF A MOTOR VEHICLE AXLE STEERING MODULE AND AN ELECTROMECHANICAL MOTOR VEHICLE STEERING SYSTEM
DISPOSITIF D'ENTRAINEMENT D'UN MODULE DE DIRECTION D'ESSIEU DE VEHICULE ET SYSTEME ELECTROMECANIQUE DE DIRECTION DE VEHICULE

(30) Priorität: 28.03.2001 DE 10115316
(43) Veröffentlichungstag der Anmeldung: 02.01.2004
(73) Patentinhaber: Continental Teves AG & Co. oHG, 60488 Frankfurt (DE)
(72) Erfinder: NELL, Joachim, 63452 Hanau (DE); JUNGBECKER, Johann, 55576 Badenheim (DE); RATH, Thomas, 63128 Dietzenbach (DE); SCHACK, Peter, 63500 Seligenstadt (DE); HOFFMANN, Oliver, 60486 Frankfurt (DE); LINKENBACH, Steffen, 65760 Eschborn (DE); BAYER, Ronald, 63165 Mühlheim/Main (DE); BÖHM, Jürgen, 65558 Oberneisen (DE); FISCHBACH, Burkhard, deceased (DE)
(86) Internationale Anmeldenummer: PCT/EP2002/003537
(87) Internationale Veröffentlichungsnummer: WO 2002/076808

(56) Entgegenhaltungen:
- US-A- 4 593 780
- US-A- 4 773 497
- US-A- 5 083 626
- US-A- 6 041 885

## Beschreibung

Die Erfindung betrifft eine Antriebseinrichtung eines Kraftfahrzeug-Achslenkmoduls, mit einem elektronischen Drehantrieb, mittels dem unter Zwischenschaltung einer Übertragungseinrichtung eine Lenkstange verlagerbar ist oder zumindest eine Verlagerung der Lenkstange antriebsmäßig unterstützbar ist, wobei die Verlagerung ein Verschwenken von lenkbaren Fahrzeugrädern bewirkt, und die Übertragungseinrichtung eine biegeweiche bzw. verdrehweiche Kupplung und/oder ein Getriebe mit einer biegeweichen bzw. verdrehweichen Lagerung aufweist, und wobei die Übertragungseinrichtungen ein Rotations-/Rotations-Getriebe (10) und ein Rotations-/Translations-Getriebe aufweist. Die Erfindung betrifft ebenso eine elektromechanische Kraftfahrzeuglenkung mit einer derartigen Antriebseinrichtung.

Heutige Kraftfahrzeuge, insbesondere Personenkraftwagen, sind in der Regel mit Servolenkungen ausgestattet, bei denen die vom Fahrer auf das Lenkhandrad (Lenkrad) aufgebrachte Handkraft unterstützt wird. Es ist bekannt, die lenkbaren Fahrzeugräder zur Unterstützung antriebsmäßig mit einem elektronischen Servomotor zu koppeln, um die für das jeweilige Lenkmanöver an dem Lenkrad notwendige Handkraft zu vermindern. Dabei wirken auf die Lenkstange über ggf. weitere Zwischenelemente, wie mit den Rädern gekoppelte Spurstangen, durch die wegabhängige Schrägstellung der Räder Radialkräfte. Die Radialkräfte erzeugen Reibkräfte in den Lagerstellen und eine Verbiegung der gesamten Lenkstange, wodurch Störungen der Lenkfunktion auftreten können und der Wirkungsgrad des Systems vermindert wird.

Die US 5083626, auf der der Oberbegriff des Anspruchs 1 basiert ist, offenbart eine Einrichtung zur Lenkung der Hinterräder in einem Fahrzeug mit vier steuerbaren Rädern, mit einem elektrischen Motor mit einem Stator und einem Rotor, mit einer Mehrzahl von Spurstangen zur Lenkung der Hinterräder, mit einem Stabteil, das sich in Querrichtung zum Fahrzeug erstreckt und dessen entgegen gesetzte Enden mit den Spurstangen jeweils verbunden sind, und mit einem Schraubenmechanismus, der auf dem Stabteil zur Umwandlung der Drehung des elektrischen Motores in eine axiale Bewegung des Stabteiles angeordnet ist, wobei der Stator und der Rotor des elektrischen Motors koaxial zu dem Stabteil angeordnet sind und dass der Motor und der Schraubenmechanismus in Bezug aufeinander in der axialen Richtung des Stabteiles nebeneinander angeordnet sind.

Die US 0641885 offenbart eine Lenkvorrichtung, die hinsichtlich der Absorption von außen auf die Lenkvorrichtung einwirken Vibrationen ausgelegt ist, um möglichst geringe Stöße, die durch unterschiedliche Wirkungen verursacht werden auf die Lenkvorrichtung zuzulassen.

Aufgabe der Erfindung ist es, eine Antriebseinrichtung eines Kraftfahrzeug-Achslenkmoduls bereitzustellen, die trotz der auf das Lenksystem einwirkenden Radialkräfte und radialen Verformungen der Lenkstange (Biegungen), mit einem guten Gesamtwirkungsgrad arbeitet und eine feinfühlige und ruckfreie Lenkbewegung der Räder gewährleistet.

Diese Aufgabe wird erfindungsgemäß dadurch gelöst, dass das Rotations-/Rotations-Getriebe über die biegeweiche bzw. verdrehweiche Kupplung mit dem Rotations-/Translations-Getriebe antriebsmäßig verbunden ist, zum im wesentlichen querkraftfreien Übertragen eines Antriebsmoments vom Rotations-/Rotations-Getriebe auf das Rotations-/Translations-Getriebe und zur biegeweichen bzw. verdrehweichen Lagerung des Rotations-/Translations-Getriebes.

Wesentlich für die erfindungsgemäße Antriebseinrichtung ist es demnach, dass die der Übertragungseinrichtung zugeordneten und mit der Lenkstange verbundenen Getriebe und/oder Kupplungen eine biegeweiche bzw. verdrehweiche Verbindung zwischen Lenkstange und dem Drehantrieb gewährleisten.

Bei der erfindungsgemäßen Antriebseinrichtung wird durch das besondere Antriebs- bzw. Lagerungskonzept der elektromechanische Gesamtwirkungsgrad optimiert. Es kann eine hohe Funktionalität (gutes Ansprechverhalten, Komfort, Gesamtwirkungsgrad) bei vertretbarem Fertigungs- und Montageaufwand erreicht werden. Im Gegensatz zu servohydraulischen Lenksystemen wird die LenkkraftUnterstützung mittels des elektronischen Drehantriebs mit angekoppelten Getrieben bzw. Kupplungen erzeugt. Dadurch sind gegenüber servohydraulischen Lenksystemen energetische Vorteile erzielbar, wodurch die erfindungsgemäße Antriebseinrichtung in Kleinfahrzeugen und leichteren Fahrzeugen besonders vorteilhaft eingesetzt werden kann.

Gemäß einer bevorzugten Ausführungsform der Erfindung ist es vorgesehen, dass Mittel zum im wesentlichen querkraftfreien Übertragen eines Antriebsmoments auf die Lenkstange vorgesehen sind.

Gemäß einer bevorzugten Ausführungsform der Erfindung ist es vorgesehen, dass die Lenkstange zumindest eine biegeweiche bzw. verdrehweiche Lagerung aufweist.

Gemäß einer bevorzugten Ausführungsform der Erfindung ist es vorgesehen, dass das Rotations-/Rotations-Getriebe ein Zugmittelgetriebe, vorzugsweise ein Zahnriemengetriebe, ist.

Gemäß einer bevorzugten Ausführungsform der Erfindung ist es vorgesehen, dass das Rotations-/Translations-Getriebe ein Wälzkörpergewindetrieb ist, mit einer Spindelstange, einer Anzahl zwischengeschalteter Wälz- oder Rollkörper und mit einer diese Spindelstange zumindest teilweise umgebenden Spindelmutter.

Bei Verwendung eines Wälzkörpergewindetriebs wird eine biegeweiche Drehmomentkupplung antriebsmäßig mit der Spindelmutter des Wälzkörpergewindetriebs verbunden. Es wird vorzugsweise ein Kugelgewindetrieb mit kugelförmigen Wälz- oder Rollkörper verwendet.

Gemäß einer bevorzugten Ausführungsform der Erfindung ist es vorgesehen, dass der elektronische Drehantrieb ein Elektromotor ist, der koaxial zur Lenkstangenachse angeordnet ist und der eine Motorkupplung aufweist, mit Mittel zur im wesentlichen querkraftfreien Antriebsmomentübertragung auf das Rotations-/Rotations-Getriebe.

Gemäß einer bevorzugten Ausführungsform der Erfindung ist es vorgesehen, dass die Lenkstange des Kraftfahrzeug-Achslenkmoduls eine Zahnstange ist, die in axialer Richtung hinter dem Rotations-/Translations-Getriebe angeordnet ist und mit einem Bauteil des Rotations-/Translations-Getriebes fest verbunden ist.

Die Aufgabe wird ebenso durch eine elektromechanische Kraftfahrzeuglenkung mit einer Antriebseinrichtung nach der Erfindung gelöst, die dadurch gekennzeichnet ist, dass ein mechanisches Lenkgetriebe vorgesehen ist, das wirkungsmäßig mit dem Lenkrad verbunden ist und eine Übertragung eines Lenkmoments durch den Fahrer des Kraftfahrzeugs vom Lenkrad auf die Lenkstange ermöglicht.

Gemäß einer bevorzugten Ausführungsform der Erfindung ist es vorgesehen, dass zur Aufnahme der entstehenden Stellkräfte auf die Lenkstange das Lenkgetriebe eine biegeweichen bzw. verdrehweichen Lagerung, vorzugsweise eine biegeweiche bzw. verdrehweiche Ritzel- und Zahnstangenlagerung, aufweist und auf der dem Lenkgetriebe gegenüberliegenden Seite die Lenkstange eine biegeweiche bzw. verdrehweiche Lagerung, vorzugsweise ein Linear-Kugellager, aufweist.

Gemäß einer bevorzugten Ausführungsform der Erfindung ist es vorgesehen, dass bei einem Ausfall oder einer Störung des elektronischen Drehantriebs der Antriebseinrichtung eine direkte Lenkbetätigung durch den Fahrer des Kraftfahrzeugs mittels des mechanischen Lenkgetriebes vorgesehen ist, wobei Bauteile der Übertragungseinrichtung mechanisch mitgeschleppt werden.

Gemäß einer bevorzugten Ausführungsform der Erfindung ist es vorgesehen, dass eine elektronische Steuereinheit vorgesehen ist, die einen Eingang aufweist, um Signale zu empfangen, welche die zwischen Lenkrad und gelenkten Fahrzeugrädern übertragenen Kräfte bzw. Momente repräsentieren, die eine Auswerteeinheit ausweist, zur Auswertung der empfangenen Signale, und die eine Signalerzeugungseinheit aufweist, zur Erzeugung von Ansteuerungs-Signalen für den elektronischen Drehantrieb, zwecks Verminderung der für das jeweilige Lenkmanöver an dem Lenkrad notwendigen Handkraft nach Maßgabe der Auswertung der zwischen Lenkrad und gelenkten Fahrzeugrädern übertragenen Kräfte bzw. Momente.

Ein Kraftfahrzeug-Achslenkmodul mit einer Antriebseinrichtung nach der Erfindung sowie dessen Funktion wird nun beispielhaft anhand von Abbildungen (Fig.1 bis Fig.14) näher erläutert.

Es zeigen:
- Fig.1: ein Kraftfahrzeug-Achslenkmodul mit einer Antriebseinrichtung mit einem Wälzkörpergewindetrieb als Rotations-/Translations-Getriebe,
- Fig.2: das in Fig.1 gezeigte Kraftfahrzeug-Achslenkmodul, teilweise ohne Gehäuse,
- Fig.3: die in Fig.1 gezeigte Antriebseinrichtung,
- Fig.4: eine perspektivische Darstellung der in Fig.3 gezeigten Antriebseinrichtung,
- Fig.5: eine vergrößerter Darstellung der in Fig.3 gezeigten Antriebseinrichtung,
- Fig.6: einen Ausschnitt der in Fig.3 gezeigten Antriebseinrichtung mit Drehantrieb und Rotations-/ Rotations-Getriebe,
- Fig.7: den in Fig.6 gezeigten Ausschnitt mit einzelnen Bauteilen des Rotations-/Rotations-Getriebes,
- Fig.8: das in Fig.6 gezeigte Rotations-/Rotations-Getriebe in einem Schnitt in vergrößerter Darstellung,
- Fig.9: die rechte Lenkstangenlagerung,
- Fig.10: die rechte Lenkstangenlagerung in einer perspektivischen Darstellung,
- Fig.11: einen Ausschnitt der rechten Lenkstangenlagerung in vergrößerter Darstellung,
- Fig.12: die linke Seite des in Fig.1 gezeigten Kraftfahrzeug- Achslenkmoduls mit Ritzel-Lenkstangenlagerung,
- Fig.13: die Ritzel-Lenkstangenlagerung in vergrößerter Darstellung,
- Fig.14: eine schematische Darstellung der auf die Lenkstange einwirkenden Kräfte und eine resultierdende Biegung der Lenkstange bei Krafteinleitung.

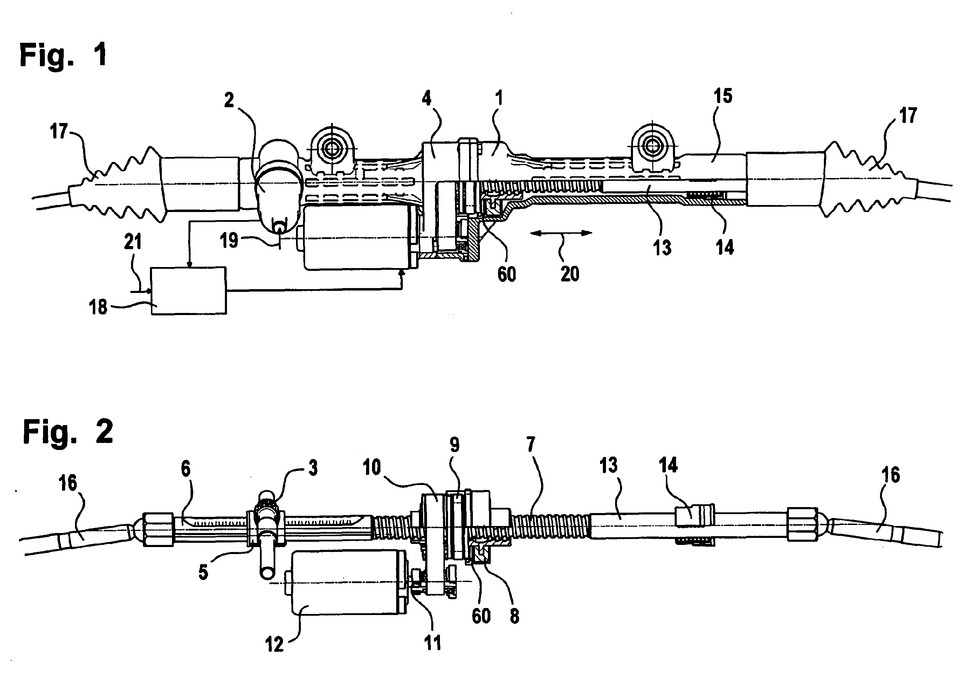

Die Gesamtansicht des Achslenkmoduls ist in der Fig.1 und Fig.2 dargestellt. Das Kraftfahrzeug-Achslenkmodul (1) weist ein rechtes Gehäuse (15) und eine linkes Gehäuse (4) auf. Im Bereich des linken Gehäuses (4) ist ein Elektromotor (12) angeordnet, der über eine Motorkupplung (11), ein Rot/Rot-Getriebe (10), das hier als Zahnriemengetriebe ausgeführt ist, eine Kupplung (9) und ein Rot/Trans-Getriebe (8), hier als Kugelgewindetrieb ausgeführt, eine Spindelstange (7) antreibt. Diese ist mit einer linke Zahnstange (6) und mit einer rechten Lenkstange (13) fest verbunden. Die Zahnstange (6) ist in einer linken Zahnstangenlagerung (5) gelagert. Über ein Antriebsritzel (3), das mit den Lenkrad verbunden ist, wird ein Lenkmoment (19) übertragen, das mittels eines Drehmomentsensor (2) erfasst wird. Die rechten Lenkstange (13) ist in einer rechten Lenkstangenlagerung (14) gelagert. Die Zahnstange (6) und rechte Lenkstange (13) sind über Spurstangen (16) mit den lenkbaren Rädern verbunden, wobei die Verbindung durch Manschetten (17) abgedichtet ist. Über den Drehmomentsensor (2) wird das eingebrachte Lenkmoment (19) des Fahrers erfasst und über eine Steuerelektronik (18) und den Elektromotor (12) und Getriebe (8,10) in eine entsprechende Lenkunterstützung (20) umgesetzt.

Die Steuereinheit (18) steuert den Elektromotor (12) in Abhängigkeit von zumindest einem Soll-Istwert-Vergleich und gegebenenfalls weiterer Größen. Dazu wird der Elektromotor (12) so angesteuert, dass ein Unterstützungsmoment ausführt wird, bei dem der vom Istwertgeber erfasste Istwert des Lenkmoments auf den vom Sollwertgeber vorgegebenen Lenkmoment-Sollwert eingeregelt wird, der durch eine Betätigung der Lenkbetätigungseinrichtung vorgegeben wird. Externe Eingriffe (21), insbesondere im Hinblick auf z.B. eine Parameterlenkung, sind optional möglich. Damit kann dieser Sollwert durch weitere Größen modifiziert werden, um auf das Fahrzeug einwirkende Störkräfte zumindest teilweise auszuregeln. Weitere Größen sind vorteilhaft die Geschwindigkeit des Fahrzeugs, die Fahrstabilität, insbesondere das Giermoment oder der Schwimmwinkel des Fahrzeugs, der Fahrbahnzustand und/oder andere Einflüsse, wie beispielsweise Seitenwind. Es ist vorgesehen, auch eine Dämpfungsfunktion zur Kompensation einer zu heftigen Fahrerbetätigung der Lenkbetätigungseinrichtung durch eine entsprechende Steuerfunktion zu integrieren.

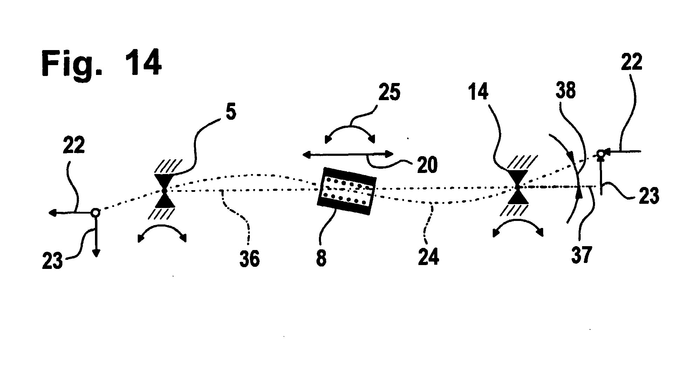

In der Fig.14 ist eine schematische Darstellung der Bewegungen der Lenkstange bei Krafteinleitung gezeigt. Bei dem Antriebskonzept werden die durch die Stellkräfte (22) hervorgerufenen einwirkenden Radialkräfte (23) und die dadurch entstehende radiale Lenkstangenverformung (24) von dem Antriebsstrang (8-12) entkoppelt. Hier wird erfindungsgemäß das Rot/Rot-Getriebe (10) durch die Kupplung (9), die biegeweich aber torsionssteif ausgeführt ist, von der durch die Lenkstangenverformung (24) hervorgerufene Pendelbewegung (25) des Rot/Trans-Getriebes (8) entkoppelt.

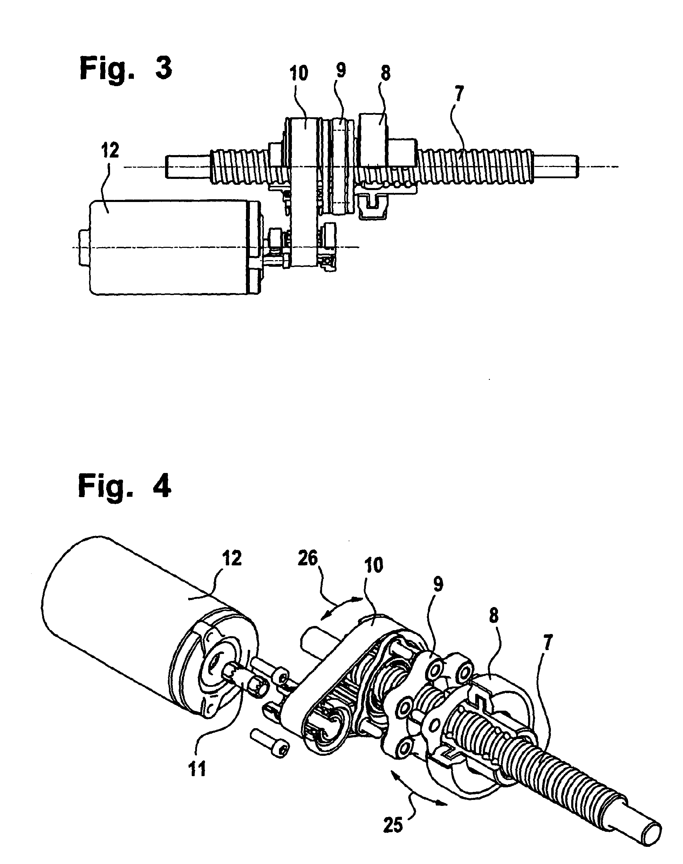

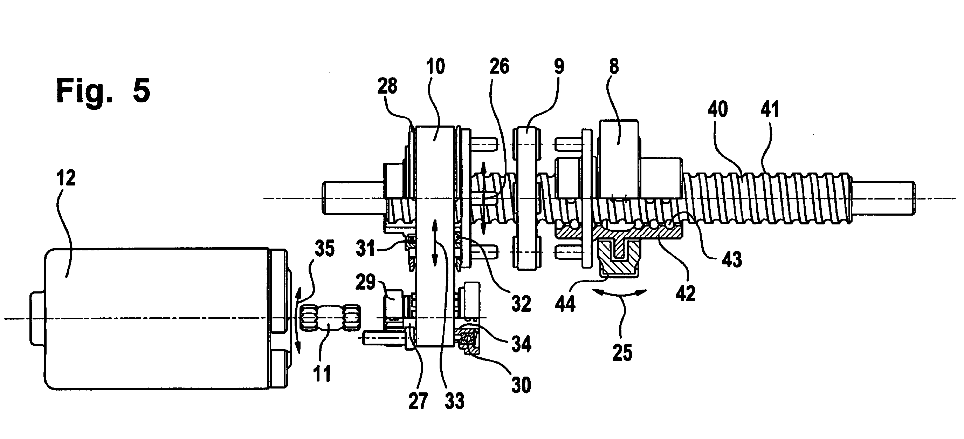

In der Fig.3, Fig.4 und Fig.5 ist die Fig.1 gezeigte Antriebseinrichtung des Kraftfahrzeug-Achslenkmoduls dargestellt. Im wesentlichen besteht die Antriebseinrichtung aus dem Elektromotor (12), der Motorkupplung (11), dem Rot/Rot-Getriebe(10), der Kupplung (9) und dem Rot/Trans-Getriebe (8) mit Spindelstange (7). Das entsprechende Antriebsmoment (26) wird vom Rot/Rot-Getriebe (10) auf das Rot/Trans-Getriebe (8) übertragen, wobei wechselseitig störend wirkende Radialkräfte erfindungsgemäß entkoppelt werden. Das Rot/Rot-Getriebe (10) weist 2 Zahn-Scheiben bzw. Riemen-Räder (27,28) auf, die jeweils durch ein Los- und Festlager (29-32) in dem linken Gehäuse (4) gelagert werden. Hierdurch werden die Riemenkräfte (33) direkt im Gehäuse (4) abgefangen und übertragen sich nicht auf den Antrieb (Elektromotor (12)) und den Abtrieb (Kupplung (9)).

Der Elektromotor (12) wird durch die Motorkupplung (11), vorzugsweise durch eine ballig ausgeführte Vielzahnwelle, mit der Antriebswelle (34) der kleinen Zahnscheibe (27) montagefreundlich und querkraftfrei gekoppelt. Durch die Motorkupplung (11) wird auch hier vom Elektromotor (12) nur das entsprechende Antriebsmoment (35) übertragen.

Durch das erfindungsgemäße Antriebskonzept wird jede Teilkomponente der Wirkkette des Antriebes entsprechend ihrer Hauptfunktion ausgebildet, wobei der Elektromotor (12) nur ein Moment überträgt, das Rot/Rot-Getriebe (10) die Untersetzung erzeugt und die Riemenkräfte (33) aufnimmt, das Rot/Trans-Getriebe (8) eine Rotationsbewegung in eine Translationsbewegung umsetzt und die Lenkstangenkräfte (22/23) der beiden Spurstangen (16) aufnimmt. Das Rot/Trans-Getriebe (8) ist mit der Spindel (7) eine eigenständige funktionelle Baugruppe. Das Rot/Trans-Getriebe (8) ist vorzugsweise ein Kugelgewindegetriebe (KGT) (39). Die KGT-Spindelstange (41) weist Kugellaufbahnen (40) auf. Über zwischengeschaltete kugelförmige Rollkörper (43), die in Kugellaufbahnen (40) abrollen, ist die KGT-Spindelstange (41) mit der KGT-Mutter (42) verbunden.

Wie oben beschrieben und in Fig.14 gezeigt, verformt sich die Lenkstange (36) unter der Belastung der Lenkstangenkräfte (22,23) und es entsteht je nach Lagerung der Lenkstange (36) eine entsprechende Lenkstangenverformung oder Biegelinie (24). Würde man die Lenkstange (36) durch eine biegesteife Lagerung in den Lagerungsstellen (5,8,14) an einer gewissen Verkippung (38) um die ideelle Achse (37) behindern, so würden dort, bedingt durch die Lagerstellenlänge, partiell in den Lagerstellen hohe Radialkräfte entstehen. Diese in den Lagerstellen entstehenden Radialkräfte können unter extremen Lenkstangenbelastungen ein schlechtes Ansprechverhalten und einen schlechten mechanischen Wirkungsgrad verursachen oder zu einem Ausfall führen. Zudem würde das Kugelgewindegetriebe (39) eine unsymmetrische Belastung der Kugellaufbahnen (40) entstehen und die Tragzahl und Lebensdauer des Kugelgewindegetriebes (39) reduzieren.

Das Rot/Trans-Getriebe (8) ist erfindungsgemäß in seiner Lagerung so ausgeführt, dass es durch formgebende Maßnahmen der Lagerung an der KGT- Mutter (42) ein Verkippen (38) in einen bestimmten Bereich zulässt. Es stellt keine koaxial steife Verbindung zur Lenkstange (36) dar. So wird die Wälzkörperbelastung vergleichmäßigt und die Tragfähigkeit und der Wirkungsgrad erhöht. Auch die Lebensdauer der Lagerung steigt. Da bei einem Lenksystem, insbesondere in der Nulllage (Geradeausfahrt), eine spielfreie Lenkung sichergestellt werden muss, wird das Rot/Trans-Getriebe (8) in einer Montagehülse (44) mit einer definierten Vorspannung vormontiert. Es bildet eine später leicht zu integrierende Baugruppe. Zudem können bei der Montage der Baugruppe Rot/Trans-Getriebe (8) alle axialen Bauteiltoleranzen kompensiert und somit die einzelnen Bauteile bezüglich der Tolerierung entschärft werden. Das Rot/Rot-Getriebe (10) ist eine eigenständige Baugruppe und montagefreundlich in dem linken Gehäuse (4) integrierbar.

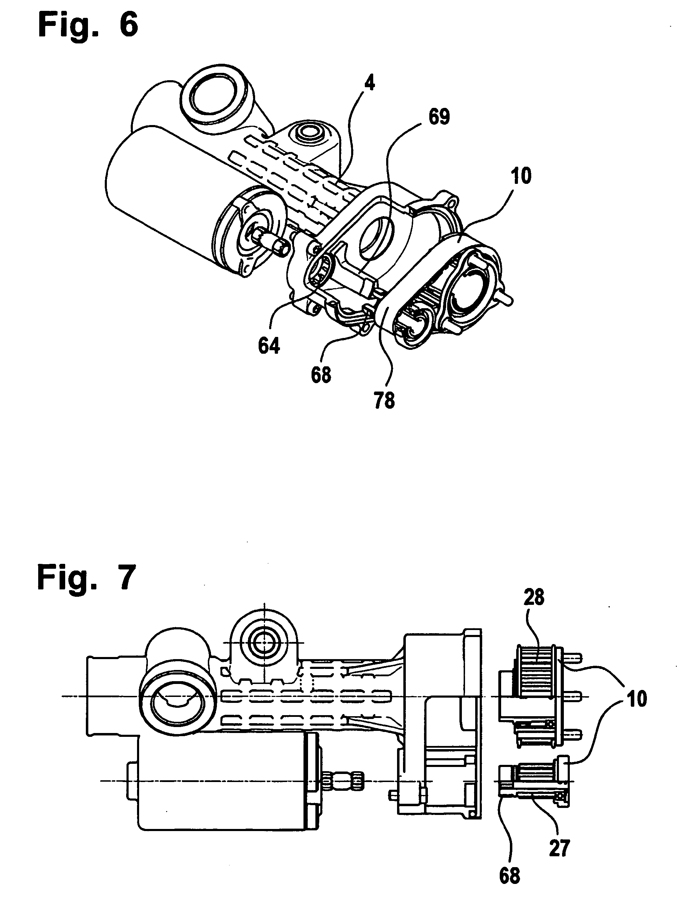

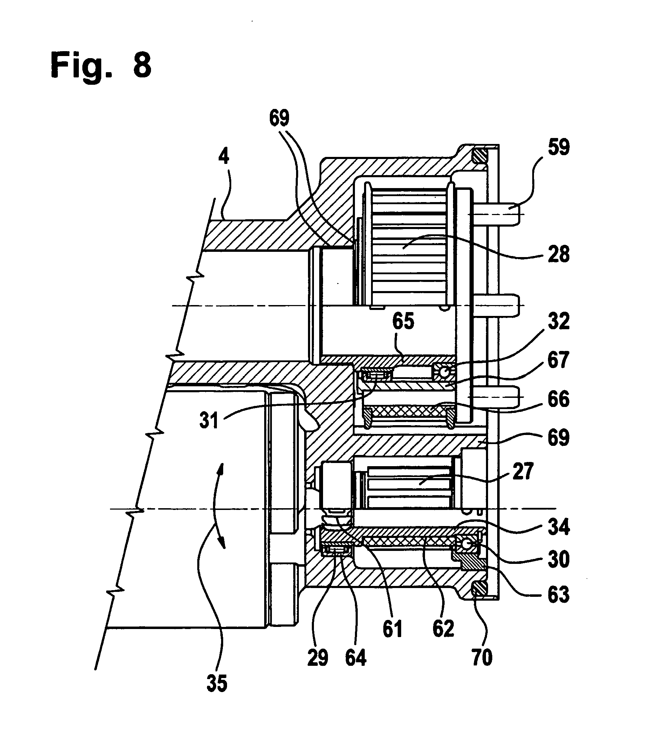

In der Fig.6, Fig.7 und Fig.8 ist das gezeigte Rotations-/Rotations-Getriebe (10) (Rot/Rot-Getriebe) näher dargestellt. Das Rot/Rot-Getriebe (10) wird hier durch einen Zahnriementrieb realisiert. Andere Getriebebauformen, wie Stirnradgetriebe, sind auch denkbar. Das Rotations-/Rotations-Getriebe (10) weist im wesentlichen die Zahn-Scheiben bzw. Riemen-Räder (27,28) mit Los- und Festlager (29,32), die Antriebswelle (34), eine Kupplungsscheibe (59), einen Schraubring (60), eine Verzahnung (61), einen kleinen Zahnscheibenring (62), einen Stützring (63), einen Außenring (64), eine Abtriebswelle (65), einen großen Zahnscheibenring (66), einen Zahnscheibenträgerring (67), einen Innenring des Loslagers (68), eine Lagerstütze (69) und eine. Dichtung (70) auf. Die kleine Zahnscheibe (27) ist der Antrieb. Der besteht aus einer Antriebswelle (34) mit integrierter Verzahnung (61) für das zu übertragende Antriebsmoment (35), einem kleinen Zahnscheibenring (62), der z.B. als Strangpressprofil aus einem Aluminiumwerkstoff oder Kunststoff ausgeführt ist, einem Loslager (29) und einem Festlager (30) mit Stützring (63). Der Außenring (64) des Loslagers (29) ist vorzugsweise im linken Gehäuse (4) aus Montagegründen bereits vormontiert. Die große Zahnscheibe (28) ist der Abtrieb. Dieser bildet eine vormontierte Baugruppe und besteht ebenfalls aus einer Abtriebswelle (65), einem großen Zahnscheibenring (66), der z.B. als Strangpressprofil aus einem Aluminiumwerkstoff oder Kunststoff ausgeführt ist, einem Loslager (31) und einem Festlager (32), einem Zahnscheibenträgerring (67) und einer mit dem Zahnscheibenträgerring (67) form- und kraftschlüssig verbundenen Kupplungsscheibe (59).

Bei der Montage wird nach dem oben beschriebenen Montageprozess die Kupplungsscheibe (59) form- und kraftschlüssig mit der KGT-Mutter (42) verstemmt, z.B. durch eine Verzahnung. Das ganze KGT- Getriebe (8) wird später im linkem Gehäuse (4) vorzugsweise durch einen Schraubring (60, siehe Fig.1 und Fig.2) demontierbar montiert. Es sind aber auch nicht demontierbare Verstemmprozesse, wie verclinchen, möglich. Bei der Endmontage des Rot/Rot-Getriebes (10) im linken Gehäuse (4) werden die beiden Zahnscheiben (27/28) in einem Montagewerkzeug mit einem variablem Achsabstand aufgenommen und der Zahnriemen (78) spannungsfrei aufgelegt. Dann kann das Montagewerkzeug Aufnahmedorne für die Zahnscheiben (27/28) auf den Sollabstand bewegen und den Zahnriemen (78) so auf eine gewünschte Vorspannung spannen. In diesem Zustand wird das Rot/Rot-Getriebe (10) in das linke Gehäuse (4) eingeführt. Die kleine Zahnscheibe (27) stützt sich mit dem Innenring des Loslagers (68) über den vormontierten Außenring des Loslagers (64) und das Festlager (30) über den Stützring (63) am linken Gehäuse (4) über-die Lagerstütze (69) ab. Es erfolgt keine "fliegende" Lagerung. Die Antriebswelle (65) wird durch ein angebrachtes Gewinde- und Führungsbund (69) im linken Gehäuse (4) demontierbar verschraubt, was einen eventuellen Riemenwechsel erleichtert, oder optional unlösbar verclincht. Eine Dichtung (70) dichtet beide Gehäuse (4/15) bei der Endmontage ab. Auch an dieser Lagerstelle ist konstruktiv aus den bekannten Gründen eine verdrehweiche Lenkstangenlagerung (14) vorgesehen.

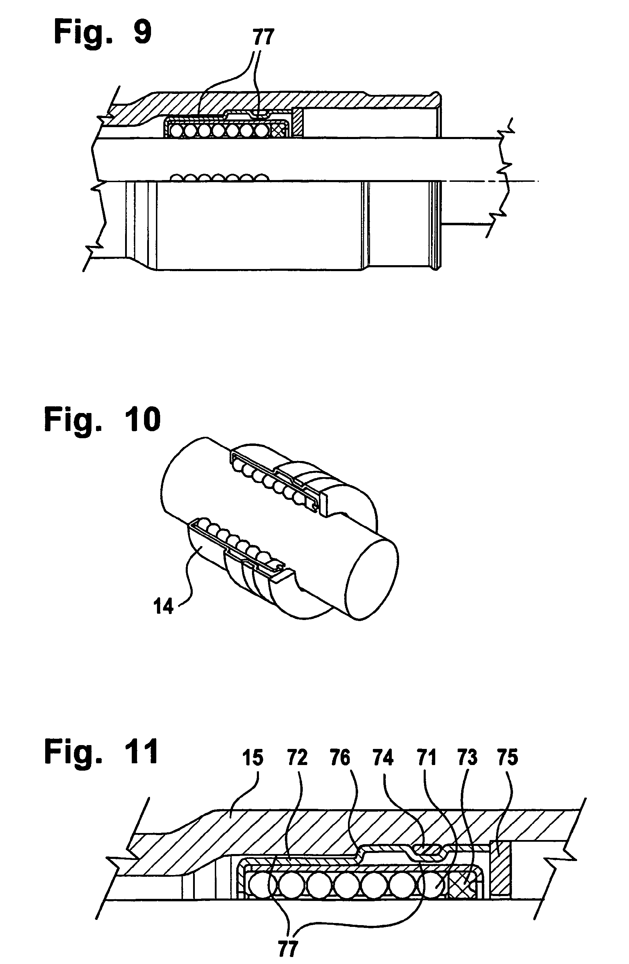

Die verdrehweiche Lenkstangenlagerung (14) ist in der Fig.9, Fig.10 und Fig.11 näher dargestellt. Nach dem Stand der Technik sind diese Lagerstellen als verdrehsteife Gleitlager ausgeführt. Erfindungsgemäß wird vorzugsweise ein Linear-Kugellager (71) in Verbindung mit einer verdrehweichen Trägerhülse (72), einem Abstreifer (73), einer Dichtung (74) und einem mechanischen Anschlag (75) vorgesehen. Durch Formgebung (76) der Trägerhülse (72) und integriertem Spiel (77) kann sich das Linear-Kugellager (71) der Biegelinie (24) anpassen und gleichzeitig einwirkende Radialkräfte (70) auf das Gehäuse (15) übertragen. Es ist ebenso vorgesehen, auch ein konventionelles Gleitlager in die verdrehweiche Trägerhülse (72) zu integrieren. Die alternative Ausführung kann entsprechend der gestellten Anforderungen, wie dem gewünschten Wirkungsgrad und notwendigem Ansprechverhalten, bevorzugt werden, wenn der Einsatz eines aufwendigen Linear-Kugellagers (71) nicht notwendig ist. Die Lenkstangenlagerung (14) ist eine axial im rechten Gehäuse (15) einschiebbare Baugruppe und wird mit dem Anschlag (75) im Gehäuse (15) verriegelt.

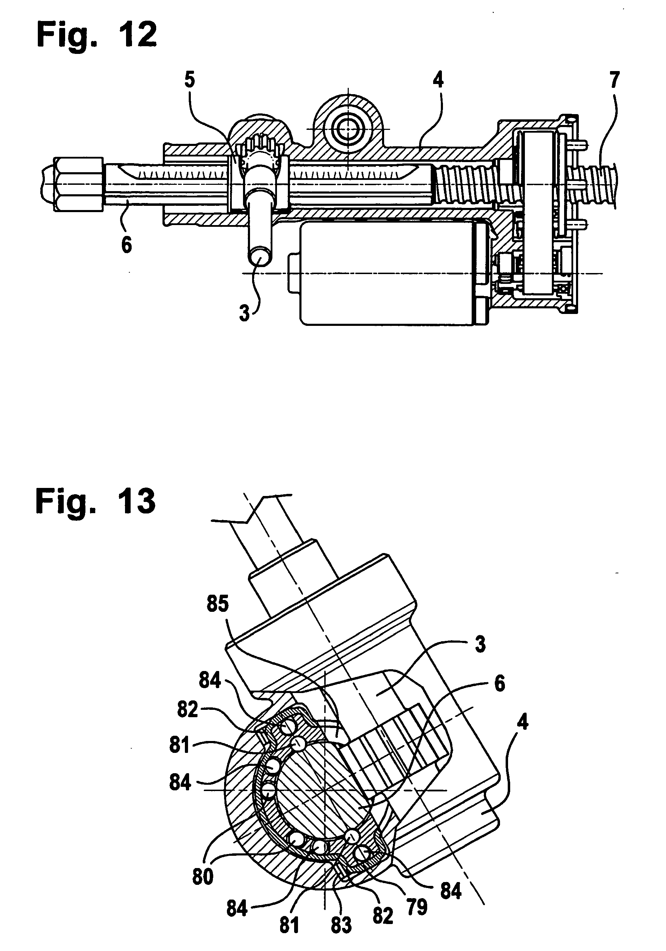

Die linke Ritzel-Lenkstangenlagerung ist in der Fig.12 und Fig.13 näher dargestellt. Nach dem Stand der Technik wird die Lenkstange über eine federbelastete Kalotte form- und reibbehaftet an das Ritzel spielfrei angedrückt. Erfindungsgemäß ist auch an dieser Lagerstelle (5) aus den genannten Gründen eine verdrehweiche Ritzel- und Lenkstangenlagerung (5) vorgesehen. Hierbei ist vorgesehen, dass diese Lagerstelle (5) eine Mehrfachfunktion erfüllt: Es wird eine spielfreie Kopplung zwischen Ritzel (3) und Zahnstange (6), eine Momentenabstützung des Antriebsmomentes der KGT-Spindel (7) und eine reiboptimierte verdrehweiche Linearführung der Zahnstange (6) vorgesehen. Die dargestellte Ritzel-Lenkstangenlagerung (5) weist diese genannten Funktionen auf und ist zudem vorteilhaft eine leicht in das Gehäuse (4) zu integrierende Baugruppe.

Die Ritzel-Lenkstangenlagerung (5) ist eine Kombination aus einem in ein Lagergehäuse (79) integriertes Linear- Kugellager (80) und einer Verdrehsicherung (81). Das Lagergehäuse (79), und somit die gesamte Ritzel- Lenkstangenlagerung (5), stützt sich an einer integrierten Schulter (82) des Gehäuse (4) radial und verdrehweich durch integrierte vorgespannte Federn (83) ab und erzeugt somit ein spielfreie Verbindung zwischen Antriebsritzel (3) und der Zahnstange (6). Gleichzeitig übernimmt die Feder das Abstützen des Antriebsmomentes, wobei ein Teil des Antriebsmomentes über das Ritzel direkt abgestützt wird. Die Kugelumläufe (84) sind im Gehäuse (79) integriert. Das Gehäuse ist einseitig geöffnet und somit eine Montage des Antriebsritzel (3) leicht möglich. Die oben beschriebene Ritzel- Lenkstangenlagerung (5) ist eine axial im linken Gehäuse (4) einschiebbare Baugruppe und wird mit einem Anschlag (85) im Gehäuse (4) verriegelt.

Insgesamt ergeben sich durch das verdrehweiche und entkoppelte Antriebs- und Lagerungskonzept der Lenkstange nach der Erfindung ein sehr guter Gesamtwirkungsgrades und ein sehr gutes Ansprechverhalten des Lenksystems. Ein optimiertes Systemverhalten wird dabei durch die Kombination der querkraftfreien Momentenübertragung zwischen Rot/Rot- und Rot/Trans-Getriebe, das verdrehweich gelagerte Kugelgewindegetriebe, das verdrehweiche rechte Linearlager und die verdrehweiche linke Zahnstangen- und Ritzellagerung ermöglicht.

### Bezugszeichenliste

Kraftfahrzeug-Achslenkmodul (1)
Drehmomentsensor (2)
Antriebsritzel (3)
linkes Gehäuse (4)
linke Zahnstangenlagerung (5)
linke Zahnstange (6)
Spindelstange (7)
Rot/Trans- Getriebe (mit Axiallagerung) (8)
Kupplung (9)
Rot/Rot- Getriebe (Zahnriemengetriebe) (10)
Motorkupplung (11)
E- Motor (12)
rechte Lenkstange (13)
rechte Lenkstangenlagerung (14)
rechtes Gehäuse (15)
Spurstangen (16)
Dichtmanschetten (17)
Steuerelektronik (18)
Lenkmoment (19)
Lenkunterstützung (20)
Externe Eingriffe (21)
Stellkräfte (22)
Radialkräfte (23)
Lenkstangenverformung oder Biegelinie (24)
Pendelbewegung (25)
Antriebsmoment (26)
Zahn-Scheiben bzw. Riemen-Räder (27/28)
Los- und Festlager (29-32)
Riemenkräfte (33)
Antriebswelle (34)
Antriebsmoment (35)
Lenkstange (36)
ideelle Achse (37)
Verkippung (38)
KGT-Getriebe (39)
KGT-Kugellaufbahnen (40)
KGT-Spindelstange (41)
KGT-Mutter (42)
KGT-Rollkörper (43)
Montagehülse (44)
Kupplungsscheibe (59)
Schraubring (60)
Verzahnung (61)
kleiner Zahnscheibenring (62)
Stützring (63)
Außenring (64)
Abtriebswelle (65)
großer Zahnscheibenring (66)
Zahnscheibenträgerring (67)
Innenring des Loslagers (68)
Lagerstütze (69)
Dichtung (70)
Linear- Kugellager (71)
Trägerhülse (72)
Abstreifer (73)
Dichtung (74)
mechanischer Anschlag (75)
Formgebung (76)
integriertem Spiel (77)
Zahnriemen (78)
Lagergehäuse (79)
Linear- Kugellager (80)
Verdrehsicherung (81).
Schulter (82)
vorgespannte Federn (83)
Kugelumläufe (84)
Anschlag (85)

## Patentansprüche

1. Antriebseinrichtung eines Kraftfahrzeug-Achslenkmoduls (1), mit einem elektronischen Drehantrieb, mittels dem unter Zwischenschaltung einer Übertragungseinrichtung eine Lenkstange (36) verlagerbar ist oder zumindest eine Verlagerung der Lenkstange (36) antriebsmäßig unterstützbar ist, wobei die Verlagerung ein Verschwenken von lenkbaren Fahrzeugrädern bewirkt, und die Übertragungseinrichtung eine biegeweiche bzw. verdrehweiche Kupplung und/oder ein Getriebe mit einer biegeweichen bzw. verdrehweichen Lagerung aufweist, und wobei die Übertragungseinrichtungen ein Rotations-/Rotations-Getriebe (10) und ein Rotations-/Translations-Getriebe (8) aufweist,
**dadurch gekennzeichnet,**
**dass** das Rotations-/Rotations-Getriebe (10) über die biegeweiche bzw. verdrehweiche Kupplung (9) mit dem Rotations-/Translations-Getriebe (8) antriebsmäßig verbunden ist, zum im wesentlichen querkraftfreien Übertragen eines Antriebsmoments vom Rotations-/Rotations-Getriebe (10) auf das Rotations-/Translations-Getriebe (8) und zur biegeweichen bzw. verdrehweichen Lagerung des Rotations-/Translations-Getriebes (8).

2. Antriebseinrichtung nach Anspruch 1,
**dadurch gekennzeichnet, dass** Mittel zum im wesentlichen querkraftfreien Übertragen eines Antriebsmoments auf die Lenkstange (36) vorgesehen sind.

3. Antriebseinrichtung nach Anspruch 1 oder 2,
**dadurch gekennzeichnet, dass** die Lenkstange (36) zumindest eine biegeweiche bzw. verdrehweiche Lagerung aufweist.

4. Antriebseinrichtung nach Anspruch 3,
**dadurch gekennzeichnet, dass** das Rotations-/Rotations-Getriebe (10) ein Zugmittelgetriebe, vorzugsweise ein Zahnriemengetriebe, ist.

5. Antriebseinrichtung nach einem Anspruch 1,
**dadurch gekennzeichnet, dass** das Rotations-/Translations-Getriebe (8) ein Wälzkörpergewindetrieb ist, mit einer Spindelstange, einer Anzahl zwischengeschalteter Wälz-oder Rollkörper und mit einer diese Spindelstange (7) zumindest teilweise umgebenden Spindelmutter.

6. Antriebseinrichtung eines Kraftfahrzeug-Achslenkmoduls nach einem der Ansprüche 1 bis 5,
**dadurch gekennzeichnet, dass** der elektronische Drehantrieb ein Elektromotor (12) ist, der koaxial zur Lenkstangenachse angeordnet ist und der eine Motorkupplung (11) aufweist, mit Mittel zur im wesentlichen querkraftfreien Antriebsmomentübertragung auf das Rotations-/Rotations-Getriebe (10).

7. Antriebseinrichtung eines Kraftfahrzeug-Achslenkmoduls nach einem der Ansprüche 4 bis 6,
**dadurch gekennzeichnet, dass** die Lenkstange des Kraftfahrzeug-Achslenkmoduls eine Zahnstange ist, die in axialer Richtung hinter dem Rotations-/Translations-Getriebe (8) angeordnet ist und mit einem Bauteil des Rotations-/Translations-Getriebes (8) fest verbunden ist.

8. Elektromechanische Kraftfahrzeuglenkung mit einer Antriebseinrichtung nach einem der Ansprüche 1 bis 7, **dadurch gekennzeichnet, dass** ein mechanisches Lenkgetriebe vorgesehen ist, das wirkungsmäßig mit dem Lenkrad verbunden ist und eine Übertragung eines Lenkmoments durch den Fahrer des Kraftfahrzeugs vom Lenkrad auf die Lenkstange ermöglicht.

9. Elektromechanische Kraftfahrzeuglenkung nach Anspruch 8, **dadurch gekennzeichnet, dass** zur Aufnahme der entstehenden Stellkräfte auf die Lenkstange das Lenkgetriebe eine biegeweichen bzw. verdrehweichen Lagerung, vorzugsweise eine biegeweiche bzw. verdrehweiche Ritzel- und Zahnstangenlagerung, aufweist und auf der dem Lenkgetriebe gegenüberliegenden Seite die Lenkstange (36) eine biegeweiche bzw. verdrehweiche Lagerung, vorzugsweise ein Linear-Kugellager (71), aufweist.

10. Elektromechanische Kraftfahrzeuglenkung nach Anspruch 8 oder 9,
**dadurch gekennzeichnet, dass** bei einem Ausfall oder einer Störung des elektronischen Drehantriebs der Antriebseinrichtung eine direkte Lenkbetätigung durch den Fahrer des Kraftfahrzeugs mittels des mechanischen Lenkgetriebes vorgesehen ist, wobei Bauteile der Übertragungseinrichtung mechanisch mitgeschleppt werden.

11. Elektromechanische Kraftfahrzeuglenkung nach einem der Ansprüche 8 bis 10,
**dadurch gekennzeichnet, dass** eine elektronische Steuereinheit vorgesehen ist, die einen Eingang aufweist, um Signale zu empfangen, welche die zwischen Lenkrad und gelenkten Fahrzeugrädern übertragenen Kräfte bzw. Momente repräsentieren, die eine Auswerteeinheit ausweist, zur Auswertung der empfangenen Signale, und die eine Signalerzeugungseinheit aufweist, zur Erzeugung von Ansteuerungs-Signalen für den elektronischen Drehantrieb, zwecks Verminderung der für das jeweilige Lenkmanöver an dem Lenkrad notwendigen Handkraft nach Maßgabe der Auswertung der zwischen Lenkrad und gelenkten Fahrzeugrädern übertragenen Kräfte bzw. Momente.

## Claims

1. Drive device of a motor vehicle axle steering module (1), having an electronic rotary drive by means of which a steering rod (36) can be displaced, with the interposition of a transmission device, or at least one displacement process of the steering rod (36) can be assisted in terms of drive, with the displacement causing steerable vehicle wheels to pivot, and the transmission device having an angularly flexible or rotationally flexible clutch and/or a gear mechanism with an angularly flexible or rotationally flexible mount, and with the transmission device having a rotation/rotation gear mechanism (10) and a rotation/translation gear mechanism (8),
**characterized**
**in that** the rotation/rotation gear mechanism (10) is connected in terms of drive to the rotation/translation gear mechanism (8) via the angularly flexible or rotationally flexible clutch (9) for the purpose of transmitting a drive torque from the rotation/rotation gear mechanism (10) to the rotation/translation gear mechanism (8) substantially without lateral forces and for angularly flexibly and rotationally flexibly mounting the rotation/translation gear mechanism (8).

2. Drive device according to Claim 1,
**characterized in that** means for transmitting a drive torque to the steering rod (36) substantially without lateral forces are provided.

3. Drive device according to Claim 1 or 2,
**characterized in that** the steering rod (36) has at least one angularly flexible or rotationally flexible mount.

4. Drive device according to Claim 3,
**characterized in that** the rotation/rotation gear mechanism (10) is a traction mechanism, preferably a toothed belt mechanism.

5. Drive device according to Claim 1,
**characterized in that** the rotation/translation gear mechanism (8) is a rolling body screw mechanism having a spindle rod, a number of interposed rolling bodies and having a spindle nut which at least partially surrounds this spindle rod (7).

6. Drive device of a motor vehicle axle steering module according to one of Claims 1 to 5,
**characterized in that** the electronic rotary drive is an electric motor (12), which is arranged coaxially to the steering rod axis and which has a motor clutch (11), having means for transmitting a drive torque to the rotation/rotation gear mechanism (10) substantially without lateral forces.

7. Drive device of a motor vehicle axle steering module according to one of Claims 4 to 6,
**characterized in that** the steering rod of the motor vehicle axle steering module is a rack which is arranged downstream of the rotation/translation gear mechanism (8) in the axial direction and is fixedly connected to a component of the rotation/translation gear mechanism (8).

8. Electromechanical motor vehicle steering system having a drive device according to one of Claims 1 to 7,
**characterized in that** a mechanical steering mechanism is provided which is operatively connected to the steering wheel and allows a steering torque implemented by the driver of the motor vehicle to be transmitted from the steering wheel to the steering rod.

9. Electromechanical motor vehicle steering system according to Claim 8,
**characterized in that**, in order to absorb actuating forces, which are produced, at the steering rod, the steering mechanism has an angularly flexible or rotationally flexible mount, preferably an angularly flexible or rotationally flexible pinion and rack mount, and, on that side which is opposite the steering mechanism, the steering rod (36) has an angularly flexible or rotationally flexible mount, preferably a linear ball bearing (71).

10. Electromechanical motor vehicle steering system according to Claim 8 or 9,
**characterized in that**, in the event of a failure of or a fault in the electronic rotary drive of the drive device, a direct steering operation by the driver of the motor vehicle by means of the mechanical steering mechanism is provided, with components of the transmission device being mechanically carried along.

11. Electromechanical motor vehicle steering system according to one of Claims 8 to 10,
**characterized in that** an electronic control unit is provided, which electronic control unit has an input in order to receive signals which represent the forces or torques transmitted between the steering wheel and steered vehicle wheels, which electronic control unit has an evaluation unit for evaluating the received signals, and which electronic control unit has a signal-generating unit for generating actuation signals for the electronic rotary drive for the purpose of reducing the manual force required on the steering wheel for the steering manoeuvre in question in accordance with the evaluation of the forces or torques transmitted between the steering wheel and steered vehicle wheels.

## Revendications

1. Dispositif d'entraînement d'un module de direction d'essieu de véhicule automobile (1), comprenant un entraînement en rotation électronique, au moyen duquel une barre de direction (36) peut être déplacée en interposant un dispositif de transfert ou au moins un déplacement de la barre de direction (36) peut être assisté par entraînement, le déplacement provoquant un pivotement des roues dirigeables du véhicule, et le dispositif de transfert présentant un embrayage souple élastique ou à faible rotation et/ou une transmission avec un support sur palier souple élastique ou à faible rotation, le dispositif de transfert présentant une transmission à rotation-rotation (10) et une transmission à rotation-translation (8),
**caractérisé en ce que**
la transmission à rotation-rotation (10) est connectée par le biais de l'embrayage souple élastique ou à faible rotation (9) à la transmission à rotation-translation (8) et ce par entraînement, dans le but de transférer essentiellement sans force transversale un couple d'entraînement de la transmission à rotation-rotation (10) à la transmission à rotation-translation (8) et en vue de supporter de manière souple élastique ou à faible rotation la transmission à rotation-translation (8).

2. Dispositif d'entraînement selon la revendication 1, **caractérisé en ce que** des moyens sont prévus pour transmettre essentiellement sans force transversale un couple d'entraînement à la barre de direction (36).

3. Dispositif d'entraînement selon la revendication 1 ou 2, **caractérisé en ce que** la barre de direction (36) présente au moins un support sur palier souple élastique ou à faible rotation.

4. Dispositif d'entraînement selon la revendication 3, **caractérisé en ce que** la transmission à rotation-rotation (10) est une transmission à moyen de traction, de préférence une transmission à courroie dentée.

5. Dispositif d'entraînement selon la revendication 1, **caractérisé en ce que** la transmission à rotation-translation (8) est une transmission à filetage à corps de roulement, avec une tige de broche, une pluralité de corps de roulement ou de corps de rouleaux interposés et avec un écrou de broche entourant cette tige de broche (7) au moins en partie.

6. Dispositif d'entraînement d'un module de direction d'essieu de véhicule automobile selon l'une quelconque des revendications 1 à 5, **caractérisé en ce que** l'entraînement en rotation électronique est un moteur électrique (12), qui est disposé co-axialement par rapport à l'axe de la barre de direction et qui présente un embrayage à moteur (11), avec des moyens pour transférer à la transmission à rotation-rotation (10) un couple d'entraînement essentiellement exempt de force transversale.

7. Dispositif d'entraînement d'un module de direction d'essieu de véhicule automobile selon l'une quelconque des revendications 4 à 6, **caractérisé en ce que** la barre de direction du module de direction d'essieu de véhicule automobile est une crémaillère, qui est disposée dans la direction axiale derrière la transmission à rotation-translation (8) et qui est connectée fixement à un composant de la transmission à rotation-translation (8).

8. Direction électromécanique de véhicule automobile comprenant un dispositif d'entraînement selon l'une quelconque des revendications 1 à 7, **caractérisée en ce qu'**une transmission de direction mécanique est prévue, laquelle est connectée fonctionnellement au volant de direction et permet un transfert d'un couple de direction par le conducteur du véhicule automobile depuis le volant à la barre de direction.

9. Direction électromécanique de véhicule automobile selon la revendication 8, **caractérisée en ce que** pour recevoir les forces de commande se produisant sur la barre de direction, la transmission de direction présente un support sur palier souple élastique ou à faible rotation, de préférence un support sur palier à pignon et crémaillère souple élastique ou à faible rotation et du côté opposé à la transmission de direction, la barre de direction (36) présente un support sur palier souple élastique ou à faible rotation, de préférence un roulement à billes linéaire (71).

10. Direction électromécanique de véhicule automobile selon la revendication 8 ou 9, **caractérisée en ce que** dans le cas d'une panne ou d'une perturbation de l'entraînement en rotation électronique du dispositif d'entraînement, un actionnement direct de la direction est prévu par le conducteur du véhicule automobile au moyen de la transmission de direction mécanique, des composants du dispositif de transmission étant entrainés mécaniquement.

11. Direction électromécanique de véhicule automobile selon l'une quelconque des revendications 8 à 10, **caractérisée en ce qu'**il est prévu une unité de commande électronique, qui présente une entrée afin de recevoir des signaux qui représentent des forces ou des couples transmis entre le volant de direction et les roues du véhicule dirigées, qui présente une unité d'analyse afin d'analyser les signaux reçus et qui présente une unité de génération de signaux, afin de produire des signaux de commande pour l'entraînement en rotation électronique, afin de réduire la force manuelle nécessaire pour chaque manoeuvre de direction respective sur le volant de direction en fonction de l'analyse des forces ou des couples transmis entre le volant de direction et les roues du véhicule dirigées.
